# EUROPÄISCHE PATENTANMELDUNG

(11) **EP 0 976 514 A1**
(43) Veröffentlichungstag der Anmeldung: **02.02.2000**
(21) Anmeldenummer: 99114112.8
(22) Anmeldetag: 16.07.1999
(51) Int. Cl.: B29B 7/74, B29B 7/76, B29B 7/82, F04B 1/00, F04B 53/16, F04B 1/20

(54) **Verfahren und Vorrichtung zum Herstellen von Polyurethan-Formteilen im Schussverfahren**

(30) Priorität: 29.07.1998 DE 19834101
(71) Anmelder: Hennecke GmbH, 51379 Leverkusen (DE)
(72) Erfinder: Sulzbach, Hans-Michael, 53639 Königswinter (DE); Althausen, Ferdinand, 53819 Neunkirchen-Seelscheid (DE)
(74) Vertreter: Drope, Rüdiger, Dr.

(57) **Zusammenfassung**

Zum Herstellen von Polyurethan-Formteilen im Schußverfahren aus Isocyanat- und Polyolkomponenten verbessert man die Herstellung dadurch, daß neben der bereits bekannten Konditionierung des Leitungssystems auch mindestens eine der handelsüblichen, aber abgewandelten Dosierpumpen (6) konditioniert wird, indem der Zwischenraum (58) zwischen ihrem abgekapselten Dosierteil (52) und ihrem Gehäuse (57) von einem Teil der angebotenen Reaktionskomponente im Kreislauf durchströmt wird.

## Beschreibung

Die Erfindung betrifft ein Verfahren und eine Vorrichtung zum Herstellen von Polyurethan-Formteilen im Schußverfahren durch simultanes Dosieren mindestens einer Isoycanatkomponente und mindestens einer Polyolkomponente, welche während der sogenannten Schußzeiten in jeweils vorbestimmten Mengen in ein Mischaggregat dosiert und miteinander vermischt und von dort in ein Formwerkzeug eingebracht werden, wobei mindestens eine der Komponenten während der Schußzeiten über eine einen Dosierteil aufweisende Dosierpumpe in das Mischaggregat dosiert wird und während der Pausenzeiten im Kreislauf gefördert wird.

Es ist allgemein bekannt, bei derartigen Verfahren Vorkehrungen zu treffen, daß die Reaktionskomponenten in konditioniertem Zustand zur Vermischung gelangen und auch das Leitungssystem selbst konditioniert ist, damit einwandfreie Formteile herstellbar sind. Für die Konditionierung wichtig sind von Beginn an und während der gesamten Betriebszeit eine gleichbleibende Temperatur der Reaktionskomponenten sowie des Systems und gleichbleibende bzw. reproduzierbare Drücke unmittelbar vor und während der Schußzeit.

Bei Volumenänderungen des Leitungssystems durch Druckänderungen während des Betriebes redet man in der Fachsprache vorn "Atmen" des Systems. Sein Volumen ist aber auch von seiner Temperaturausdehnung abhängig. Die Einhaltung der Temperaturbedingungen ist im wesentlichen über längere Pausen- oder gar Stillstandszeiten problematisch. Für die Herstellung weniger anspruchsvoller Formteile bedient man sich als Dosieraggregat einer Zahnradpumpe oder einer Schneckenpumpe. Zur Herstellung präziser Formteile ist die Verwendung einer schnellaufenden Dosierkolbenpumpe, beispielsweise einer Reihenkolbenpumpe, einer Axial- oder einer Radialkolbenpumpe unumgänglich. Für zähflüssige und füllstoffhaltige Reaktionskomponenten finden Kolbendosiergeräte Anwendung. Als Mischaggregat dienen insbesondere Mischköpfe mit Ausstoßkolben. Üblicherweise wird gemäß einem solchen Verfahren der Herstellungsablauf halb- oder vollautomatisch gesteuert, indem ein zentrales Steuergerät der Vorrichtung aufdie Pumpen, wie Vordruckpumpen, Förderpumpen, Dosierpumpen oder gegebenenfalls Kolbendosiergeräte, sowie auf die Ventile, wie Absperrventile, gegebenenfalls Drosselventile und Umschaltventile, sowie gegebenenfalls auf den Steuerkolben oder die Düsennadeln eines Mischaggregates einwirkt. Eine solche Vorrichtung ist in der Regel der Dosier- und Mischteil einer Anlage, zu welcher auch noch ein mehrere Formwerkzeuge tragender Teil, beispielsweise ein Rundtisch, gehören. Der gesamten Anlage kann auch ein zentrales Steuergerät zugeordnet sein oder für den die Formwerkzeuge tragenden Teil ist ein zweites, mit dem ersten Steuergerät gekoppeltes Steuergerät vorgesehen. (Siehe ganz allgemein Kunststoff Handbuch, Band 7 "Polyurethane", Carl Hanser-Verlag München/ Wien 1983, Seiten 121 bis 168).

Bei der Konditionierung der Vorrichtung hat bisher die Konditionierung der Dosierpumpe keine Berücksichtigung gefunden.

Die Dosierpumpe besitzt in aller Regel ein gekapseltes Dosierteil, wie beispielsweise eine Axialkolbendosierpumpe mit mehreren Kolben und Zylindern. Dieses gekapselte Dosierteil ist von einem Pumpengehäuse umgeben, wobei sich zwischen beiden ein Zwischenraum zum Auffangen von Leckageflüssigkeit befindet.

Es wurde festgestellt, daß die an sich stabil gebaute Dosierpumpe bzw. ihr Dosierteil ebenfalls dem Temperatureinfluß unterworfen ist. Obwohl die temperierte Reaktionskomponente beim Dosieren von innen temperaturmäßig auf das Dosierteil einwirkt, besteht nach außen zu ein von der Umgebungstemperatur abhängiges, also wechselndes Temperaturgefälle. Negativ wirkt sich in diesem Zusammenhang auch die Eigenerwärmung der Pumpe aus.

Aufgabe der Erfindung ist es, auch das Inhaltsvolumen, also das von der Reaktionskomponente ausgefüllte Volumen des Dosierteils der Dosierpumpe, durch Konditionierung dieses Dosierteils während der gesamten Betriebszeit konstant zu halten und damit eine einwandfreie Herstellung von Formteilen zu gewährleisten.

Die neue Erfindung ist im nachstehenden der Übersichtlichkeit halber nur für eine der Reaktionskomponenten beschrieben.

Diese Aufgabe wird dadurch gelöst, daß eine der Dosierpumpe vorgeordnete Vordruckpumpe während der gesamten Betriebszeit arbeitet und eine größere Menge der Komponente fördert, als von der Dosierpumpe während der Dosierzeiten benötigt wird, wobei während der gesamten Betriebszeit ein Teil der angebotenen Komponentenmenge durch einen zwischen dem Dosierteil und dem Gehäuse der Dosierpumpe gebildeten Zwischenraum im Kreislauf geführt wird.

Dadurch wird erreicht, daß das eigentliche Dosierteil nicht nur von innen durch den zu dosierenden Komponentenanteil auf Arbeitstemperatur gehalten wird, sondern auch von außen. Auch durch zeitliche Druckunterschiede bewirktes "Atmen" des Dosiervolumens der Dosierpumpe wird unterbunden, auch wenn diese dadurch verursachten Volumenschwankungen minimal bzw. in der Regel vernachlässigbar sind.

Aus der Erfindung ergeben sich verschiedene Möglichkeiten zu verfahren:

Gemäß einer vorteilhaften Durchführungsform des Verfahrens wird während der Dosierzeiten eine geringere Menge der von der Vordruckpumpe angebotenen Komponente durch den Zwischenraum in der Dosierpumpe gefördert als vergleichsweise während der Pausenzeiten.

Vorzugsweise wird zumindest zeitweise ein Teil der angebotenen Komponentenmenge im Bypass an der Dosierpumpe vorbei im Kreislauf geführt.

Diese Verfahrensvariante ist besonders günstig, weil je nach Verfahrensweise die überschüssige, durch die Vordruckpumpe angelieferte Komponentenmenge teilweise und gegebenenfalls zeitweise, d.h. während der Pausenzeiten, über diesen Bypass im Kreislauf zurückgeführt werden kann, was sich positiv auf die Stabilität der Parameter insbesondere während der Dosier- bzw. Schußzeiten auswirkt.

Gemäß einer weiteren Variante kann es vorteilhaft sein, in den Pausenzeiten die gesamte angebotene Komponentenmenge durch den Zwischenraum des Gehäuses zu führen.

In diesem Falle wäre in den Pausenzeiten keine Bypass-Führung an der Dosierpumpe vorbei nötig.

Vorzugsweise arbeitet die Dosierpumpe nur während der Dosierzeiten.

Dies hat den Vorteil von Energieersparnis und ist deshalb möglich, weil ja das an die Dosierpumpe anschließende Leitungssystem vor dem Schuß durch die Kreislaufführung der Komponente bzw. des einwirkenden Komponentenanteils an der Dosierpumpe vorbei konditioniert wird.

Alternativ arbeitet die Dosierpumpe während der Betriebszeiten natürlich kontinuierlich, wobei das Umschaltventil mit Beginn des Dosiervorganges umgeschaltet wird und von der vorherigen Rücklaufstellung dann in die Mischkammer öffnet. Dann allerdings ist die Dosierpumpe durch ihr ständiges Arbeiten erhöhtem Verschleiß ausgesetzt.

Die neue Vorrichtung zum Herstellen von Polyurethan-Formteilen in einem Form-werkzeug aus mindestens einer Isoycanatkomponente und mindestens einer Polyolkomponente im sogenannten Schußverfahren geht je Komponente aus von:
a) einem Vorratsbehälter,
b) einer vom Vorratsbehälter über ein Dosieraggregat und ein Umschaltventil zu einem Mischaggregat führenden Zuführleitung, wobei mindestens eines der Dosieraggregate aus einer Dosierpumpe besteht,
c) einer vom Umschaltventil zum Vorratsbehälter zurückführenden Kreislaufleitung, wobei
d) diese Dosierpumpe während der Schußzeiten über das Umschaltventil mit dem Mischaggregat verbunden ist,
   sowie aus einem dem Mischaggregat nachgeordneten Formwerkzeug und aus einem Steuergerät für die Ventile und Pumpen.
   Das Neue ist darin zu sehen, daß
e) der Dosierpumpe eine während der Betriebszeit dauernd arbeitende Vordruckpumpe vorgeordnet ist,
f) eine Abzweigleitung der zur Dosierpumpe führenden Zuleitung in den den Dosierteil umgebenden Zwischenraum des Gehäuses führt und von diesem Gehäuse in die Rückleitung mündet.

Dabei ist stillschweigend vorausgesetzt, daß, wie üblich, in den wichtigen Leitungen gegebenenfalls Absperr- bzw. Drosselventile vorgesehen sind, um möglichst viele bzw. alle der vorbeschriebenen Verfahrensvarianten mit der neuen Vorrichtung ausüben zu können. Das Leitungssystem kann dabei für maximalen Durchsatz ausgelegt sein, und einstellbare Drosselventile dienen der Verfahrensoptimierung. Absperrund Drosselventile können je nach Bedarf manuell einstellbar sein. Üblich ist jedoch eine Justierung beim Einfahren der Vorrichtung, und zur Automatisierung des späteren Fertigungsablaufes eine automatische Betätigung durch das Steuergerät, vorzugsweise gemäß einem vorgegebenen Programm im Sinne des Ablaufes der einzelnen, aufeinanderfolgenden Verfahrensschritte. In gleicher Weise sind die Pumpen und gegebenenfalls der Steuerkolben des Mischaggregates mit dem Steuergerät ansteuerbar verbunden.

Gemäß einer bevozugten Ausführungsform der neuen Vorrichtung zweigt von der zur Dosierpumpe führenden Zuleitung eine die Dosierpumpe umgehende Bypass-Leitung ab und mündet in die Zuleitung.

Auch hier dient vorzugsweise ein Absperrventil und/oder Drosselventil der Wahlmöglichkeit der vorstehend beschriebenen Verfahrensschritte.

Vorzugsweise besteht die Dosierpumpe aus einer Zahnradpumpe, aus einer Schneckenpumpe oder aus einer schnellaufenden Axialkolbenpumpe bzw. Radialkolbenpumpe, wie dies allgemein bekannt ist. Wichtig ist lediglich, daß die Dosierpumpe einen Dosierteil aufweist, welcher von einem Gehäuse umgeben ist, wobei der gebildete Zwischenraum mit Zulaufund Ablauf der besagten Zweigleitung versehen ist. Bei herkömmlichen Dosierpumpen ist ein solcher Zwischenraum als Auffangraum für Leckage vorhanden und mit Ablaßöffnungen versehen. Er läßt sich entsprechend umfunktionieren.

In Verfolgung des neuen Gedankens der Konditionierung der Pumpe wäre es möglich, zu ihrer Verwendung auch die bekannten Kolbendosiergeräte mit einem Gehäuse zu versehen, so daß dann das im wesentlichen aus Kolben und Zylinder bestehende Kolbendosiergerät das Dosierteil bildet, welches unter Belassung eines mit Zulaufund Ablauf für die Abzweigleitung versehenen Zwischenraumes von dem Gehäuse umgeben ist. Dieser technisch zwar vorteilhaften und möglichen Ausgestaltung dürfte aber aus Kostengründen die Realisierung versagt bleiben.

In der Zeichnung ist die neue Vorrichtung rein schematisch dargestellt und nachstehend näher erläutert. Dabei ist die neue Vorrichtung so gestaltet, daß sie nach möglichst vielen Verfahrensvarianten betreibbar ist. Es zeigen:
- Fig. 1: ein Schema der gesamten Vorrichtung und
- Fig.2: einen detaillierten Schnitt durch eine zu dieser Vorrichtung gehörenden handelsüblichen, jedoch dem neuen Gedanken entsprechend abgewandelten, Dosierpumpe in vergrößertem Maßstab.

Für beide Figuren wurden, soweit möglich, für die gleichen Merkmale die gleichen Bezugszeichen verwendet.

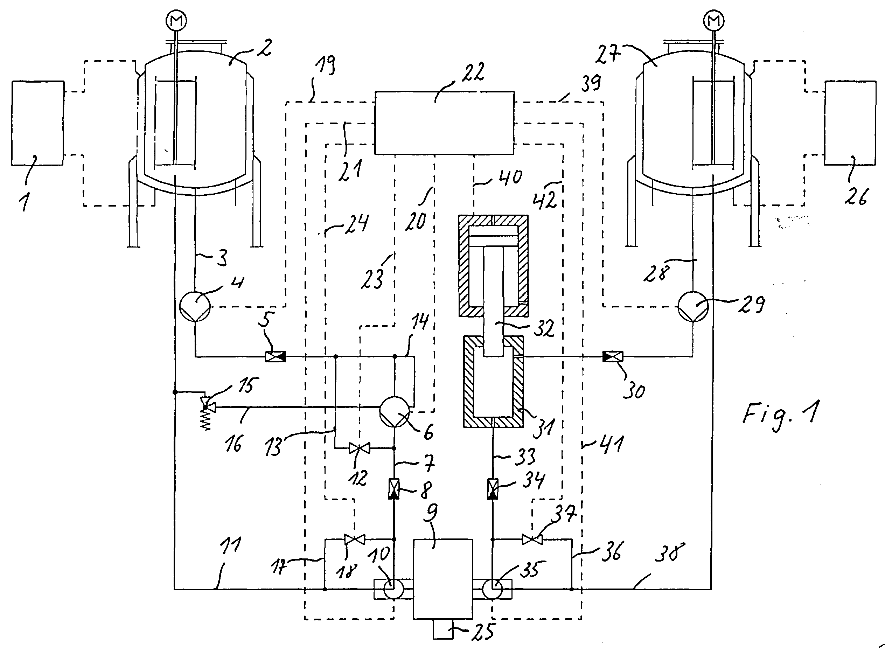

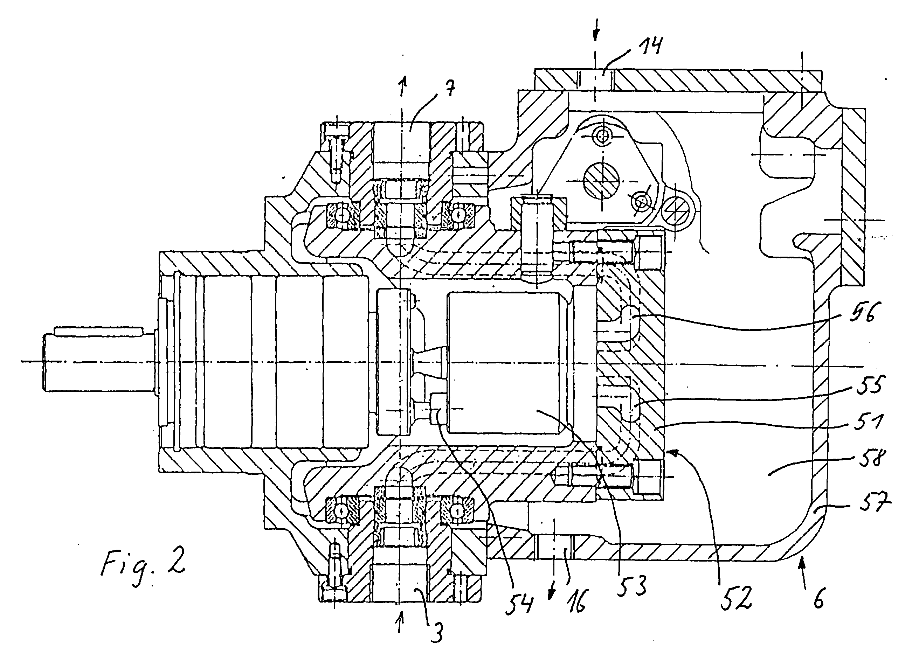

In Fig. 1 führt von einem an ein Temperiergerät 1 angeschlossenen Vorratsbehälter 2 für die Komponente A (z. B. Isocyanat) eine Zuleitung 3 über eine Vordruckpumpe 4 und über ein Rückschlagventil 5 zu einer Dosierpumpe 6 (siehe Fig.2). Von ihr führt eine Zuleitung 7, welche ebenfalls ein Rückschlagventil 8 enthält, zu einem unmittelbar vor einem Mischaggregat 9 angeordneten, als Drei-Wege-Ventil ausgebildeten Umschaltventil 10. Vom Umschaltventil 10 führt eine Kreislaufleitung 11 wieder zum Vorratsbehälter 2. Von der Zuleitung 3 zweigt zwischen dem Rückschlagventil 5 und der Dosierpumpe 6 eine die Dosierpumpe 6 umgehende und ein Absperrventil 12 aufweisende Bypass-Leitung 13 ab und mündet in die Zuleitung 7. Des weiteren zweigt vor der Dosierpumpe 6 eine Zweigleitung 14 ab und führt - siehe Fig. 2 - in den zwischen dem Dosierteil 52 und dem Gehäuse 57 der Dosierpumpe 6 gebildeten Zwischenraum 58 und von diesem über eine mit einem Überdruckventil 15 versehene Rückleitung 16 in die Kreislaufleitung 11. Eine weitere Bypass-Leitung 17 zweigt hinter dem Rückschlagventil 8 von der Zuleitung 7 ab und mündet über ein Absperrventil 18 in die Kreislaufleitung 11. Die Vordruckpumpe 4, die Dosierpumpe 6 sowie das Umschaltventil 10 sind über Impulsleitungen 19, 20, 21 mit einem Steuergerät 22 verbunden. Weitere Impulsleitungen 23, 24 verbinden das Steuergerät 22 mit dem Absperrventil 12 und dem Absperrventil 18. Dem Auslaß 25 des Mischaggregates 9 ist ein nicht dargestelltes Formwerkzeug zugeordnet.

Die Komponente B (z. B.Polyol) ist ebenfalls in einem mit einem Temperiergerät 26 versehenen Vorratsbehälter 27 gelagen. Von dem Vorratsbehälter 27 führt eine Zuleitung 28 über eine Förderpumpe 29 und Rückschlagventil 30 zu einem hydraulisch betätigten Kolbendosiergerät 31 mit Dosierkolben 32. Von dem Kolbendosiergerät 31 führt eine Zuleitung 33 über ein einstellbares Rückschlagventil 34 zu einem vor dem Mischaggregat 9 angeordneten Umschaltventil 35, welches im Aufbau dem Umschaltventil 10 entspricht. Von der Zuleitung 33 führt eine Bypass-Leitung 36 über ein Absperrventil 37 in eine vom Umschaltventil 35 in den Vorratsbehälter 27 zurückführende Kreislaufleitung 38. Das Steuergerät 22 ist über Impulsleitungen 39, 40, 41, 42 mit der Förderpumpe 29, dem Kolbendosiergerät 31, dem Umschaltventil 35 und dem Absperrventil 37 verbunden.

In Fig. 2 besteht die Dosierpumpe 6 aus einem von einer Kapsel 51 umgebenen Dosierteil 52, in welchem auf einem Rotor 53 mehrere Dosierkolben 54 angeordnet sind. Die Zuleitung 3 mündet in einen Saugraum 55 dieses Dosierteils 52, und die Dosierkolben 54 dosieren während der Dosierzeiten von der angebotenen Komponente A in einen Druckraum 56, von welchem die Zuleitung 7 wegführt. In den zwischen dem Dosierteil 52 bzw. seiner Kapsel 51 und dem eigentlichen Gehäuse 57 der Dosierpumpe 6 vorhandenen Zwischenraum 58 mündet die Zweigleitung 14, und von diesem Raum 58 führt die Rückleitung 16 weg und mündet über das Überströmventil 15 in die Kreislaufleitung 11.

Eines der vielen mit der Vorrichtung gemäß Fig. 1, 2 ausübbaren Verfahren läuft folgendermaßen ab:

Zunächst bedarf es nach einer längeren Stillstandszeit, wie beispielsweise nach einem nächtlichen Stillstand, einiger Minuten Vorkonditionierung auf den Betriebszustand. Ist dieser Betriebszustand mit Vorkonditionierung der Vorrichtung erreicht, so befindet sich die Vorrichtung in der sich aus wiederkehrenden Pausenzeiten und Dosierzeiten (Schußzeiten) zusammensetzenden Betriebszeit.

Nun fördert während der Pausenzeiten die Vordruckpumpe 4 die temperierte Komponente A teils über die Zuleitung 3 und die Zweigleitung 14 in den Raum 58 der stillstehenden Dosierpumpe 6, und sie gelangt über die Rückleitung 16 und die Kreislaufleitung 11 in den Vorratsbehälter 2. Der andere Teil wird über die Bypass-Leitung 13 in die Zuleitung 7, über das Rückschlagventil 8 und das Umschaltventil 10 und weiter über die Kreislaufleitung 11 in den Vorratsbehälter 2 gefördert. Währenddessen fördert die Förderpumpe 29 die Komponente B durch das Kolbendosiergerät 31, dessen Dosierkolben 32 zurückgefahren ist, über das Rückschlagventil 34 der Zuleitung 33 und das Umschaltventil 35 über die Kreislaufleitung 38 zurück in den Vorratsbehälter 27. Durch diese Fahrweise wird die Vorrichtung in den Pausenzeiten zu ihrer Konditionierung auf Betriebsdruck und Betriebstemperatur gehalten.

Steht nun ein Schuß an, so erhält die Dosierpumpe 6 über die Impulsleitung 20 den Befehl zu arbeiten, während das Absperrventil 12 der Bypass-Leitung 13 und das Absperrventil 18 der Bypass-Leitung 17 schließen. Von der angebotenen Komponente A wird weiterhin ein Teil über die Zweigleitung 14 durch den Zwischenraum 58 in der Dosierpumpe 6 über die Rückleitung 16 zum Vorratsbehälter 2 gefördert. Jetzt fördert aber die Dosierpumpe 6 den anderen Teil über die Zuleitung 7 und die Kreislaufleitung 11 in den Vorratsbehälter 2 zurück. Nach wenigen Sekunden, in denen sich im System die Schußkonditionen aufgebaut haben, erhält Umschaltventil 10 den Befehl, in das Mischaggregat 9 zu öffnen. Für die vom Steuergerät 22 vorgegebene Zeit dosiert nun die Dosierpumpe 6 den Schuß in das Mischaggregat 9.

Die Komponente B der Vorrichtung arbeitet ähnlich. Die Förderpumpe 29 erhält den Befehl zum Stillstand, während das Absperrventil 37 die Bypass-Leitung 36 schließt. Danach fördert der Dosierkolben 32 Komponente B in die Zuleitung 33 und über das Umschaltventil 35 in die Kreislaufleitung 38 bis in den Vorratsbehälter 27. Gleichzeitig mit der Umschaltung des Umschaltventils 10 erhält auch Umschaltventil 35 den Befehl, in das Mischaggregat 9 zu öffnen. Es bleibt exakt so lange geöffnet wie das Umschaltventil 10, nämlich bis zum Beendigen des Schusses. Es versteht sich, daß die Befehle der beiden Komponentenseiten aufeinander abgestimmt sein müssen.

Nach dem Schuß erhalten die Umschaltventile 10, 35 Befehl zum Umschalten, und zwar verbindet jetzt das Umschaltventil 10 die Zuleitung 7 mit der Kreislaufleitung 11; und in gleicher Weise verbindet jetzt das Umschaltventil 35 die Zuleitung 33 mit der Kreislaufleitung 38, so daß die Komponenten im Kreislauf in die Vorratsbehälter 2, 27 zurückgefördert werden. Der Dosierkolben 32 erhält Befehl zum Zurückfahren. Auf der Seite der Komponente A erhält aber die Dosierpumpe 6 gleichzeitig Befehl, nicht mehr zu arbeiten, und das Absperrventil 12 in der Bypass-Leitung 13 öffnet zur Wiederherstellung des Kreislaufes für den nicht durch den Zwischenraum 58 geförderten Komponententeil. Des weiteren öffnen die Absperrventile 18 und 37. Nach der vorgegebenen Pausenzeit kommt vom Steuergerät 22 Befehl für den nächsten Dosiervorgang bzw. Schuß.

## Patentansprüche

1. Verfahren zum Herstellen von Polyurethan-Formteilen im Schußverfahren durch simultanes Dosieren mindestens einer Isoycanatkomponente und mindestens einer Polyolkomponente, welche während der sogenannten Schußzeiten in jeweils vorbestimmten Mengen in ein Mischaggregat (9) dosiert und miteinander vermischt und von dort in ein Formwerkzeug eingebracht werden, wobei mindestens eine der Komponenten während der Schußzeiten über eine einen Dosierteil (52) aufweisende Dosierpumpe (6) in das Mischaggregat (9) dosiert wird und während der Pausenzeiten im Kreislauf gefördert wird, dadurch gekennzeichnet, daß eine der Dosierpumpe (6) vorgeordnete Vordruckpumpe (4) während der gesamten Betriebszeit arbeitet und eine größere Menge der Komponente fördert, als von der Dosierpumpe (6) während der Dosierzeiten benötigt wird, wobei während der gesamten Betriebszeit ein Teil der angebotenen Komponentenmenge durch einen zwischen dem Dosierteil (52) und dem Gehäuse (57) der Dosierpumpe (6) gebildeten Zwischenraum (58) im Kreislauf geführt wird.

2. Verfahren nach Anspruch 1, dadurch gekennzeichnet, daß während der Dosierzeiten eine geringere Menge der angebotenen Komponente im Kreislauf durch den Zwischenraum (58) in der Dosierpumpe (6) gefördert wird als vergleichsweise während der Pausenzeiten.

3. Verfahren nach Anspruch 1 oder 2, dadurch gekennzeichnet, daß zumindest zeitweise ein Teil der angebotenen Komponentenmenge im Bypass (13) an der Dosierpumpe (6) vorbei im Kreislauf geführt wird.

4. Verfahren nach Anspruch 1 oder 2, dadurch gekennzeichnet, daß in den Pausenzeiten die gesamte angebotene Komponentenmenge durch den Zwischenraum (58) in der Dosierpumpe (6) geführt wird.

5. Verfahren nach den Ansprüchen 1, 2 oder 3, dadurch gekennzeichnet, daß während der Pausenzeiten ein Teil der angebotenen Komponentenmenge im Kreislauf über den Bypass (13) geführt wird.

6. Verfahren nach einem der Ansprüche 1 bis 5, dadurch gekennzeichnet, daß die Dosierpumpe (6) nur während der Dosierzeiten arbeitet.

7. Vorrichtung zum Herstellen von Polyurethan-Formteilen in einem Formwerkzeug aus mindestens einer Isoycanatkomponente und mindestens einer Polyolkomponente im sogenannten Schußverfahren, bestehend je Komponente aus:
a) einem Vorratsbehälter (2, 27),
b) einer vom Vorratsbehälter (2, 27) über ein Dosieraggregat (6, 31) und ein Umschaltventil (10, 35) zu einem Mischaggregat (9) führenden Zuführleitung (7, 33), wobei mindestens eines der Dosieraggregate (6, 31) aus einer Dosierpumpe (6) besteht,
c) einer vom Umschaltventil (10, 35) zum Vorratsbehälter (2, 27) zurückführenden Kreislaufleitung (11, 38),
d) wobei diese Dosierpumpe (6) während der Schußzeiten über das Umschaltventil (10) mit dem Mischaggregat (9) verbunden ist,
sowie aus einem dem Mischaggregat (9) nachgeordneten Formwerkzeug und aus einem Steuergerät (22) für die Ventile (10; 12; 18, 35; 37) und Pumpen (4; 6; 29; 35), dadurch gekennzeichnet,
daß
e) der Dosierpumpe (6) eine während der Betriebszeit dauernd arbeitende Vordruckpumpe (4) vorgeordnet ist,
f) eine Abzweigleitung (14) der zur Dosierpumpe (6) führenden Zuleitung (3) in den den Dosierteil (52) umgebenden Zwischenraum (58) des Gehäuses (57) führt, und von diesem Gehäuse (57) in die Rückleitung (11) mündet.

8. Vorrichtung nach Anspruch 7, dadurch gekennzeichnet, daß von der zur Dosierpumpe (6) führenden Zuleitung (3) eine die Dosierpumpe (6) umgehende Bypass-Leitung (13) abzweigt und in die Zuleitung (7) mündet.

9. Vorrichtung nach Anspruch 8, dadurch gekenzeichnet, daß in der Bypass-Leitung (13) ein von dem Steuergerät (23) steuerbares Ventil (12) angeordnet ist.

10. Vorrichtung nach den Ansprüchen 7, 8 oder 9, dadurch gekennzeichnet, daß die Dosierpumpe (6) aus einer Zahnradpumpe, aus einer Schneckenpumpe oder aus einer schnellaufenden Axialkolbenpumpe bzw. Radialkolbenpumpe besteht.
